# DEMANDE DE BREVET EUROPEEN

(11) **EP 1 298 570 A1**
(43) Date de publication de la demande: **02.04.2003**
(21) Numéro de dépôt: 02292394.0
(22) Date de dépôt: 27.09.2002
(51) Int. Cl.: G06F 17/60

(54) **Procédé et système d'analyse d'au moins un élément constituant un travail à facon à réaliser, de gravure ou de découpe personnalisée**

(30) Priorité: 28.09.2001 FR 0112520
(71) Demandeur: Gravindus, 60540 Bornel (FR)
(72) Inventeur: Martin, Bernard, 60510 Breseles (FR)
(74) Mandataire: Debay, Yves

(57) **Abrégé**

La présente invention concerne un procédé et un système d'analyse d'au moins un élément comprenant au moins une caractéristique et constituant un travail à façon à réaliser, de gravure ou de découpe personnalisée, caractérisé en ce qu'il est mis en oeuvre à l'aide d'un système (1) informatique intégrant un procédé de gestion de travaux à façon, personnalisés. Ce procédé comprend des étapes de :
- saisie sur des moyens de saisie du système (1) de l'élément et de sa caractéristique,
- mémorisation de l'élément et de sa caractéristique dans des moyens de mémorisation,
- analyse de l'élément et de sa caractéristique mémorisés par des moyens d'analyse du système informatique,
- en fonction de l'analyse effectuée, identification d'une base de données stockant l'élément et sa caractéristique analysés,
- extraction de cette base de données identifiée, d'une valeur pour l'élément et sa caractéristique.

## Description

La présente invention concerne un procédé d'analyse d'au moins un élément constituant un travail à façon à réaliser, de gravure ou de découpe personnalisée et un système informatique pour l'analyse d'au moins un élément constituant un travail à façon à réaliser, de gravure ou de découpe personnalisée.

Dans l'art antérieur, l'analyse d'un travail à façon, de gravure ou de découpe personnalisée, par exemple de son prix, est très souvent réalisée de manière approximative. En ce qui concerne la tarification d'une gravure, celle-ci est en général effectuée en tenant tout d'abord compte du format de la plaque à graver et éventuellement du mode de fixation de cette plaque sur son support. Ensuite plusieurs tarifications sont possibles pour un travail de gravure :
- Les tarifs peuvent être faits à la ligne, le prix est alors fixe pour une ligne de gravure. Une ligne peut avoir 1, 15, 30 caractères ou plus.
- Les tarifs peuvent être forfaitaires pour un format ou une surface donnée quel que soit le nombre de lignes ou de caractères.
- Les tarifs peuvent être estimés de manière parfaitement aléatoire en fonction de l'offre des concurrents, d'un prix de marché ou du client.

Ces modes de tarification présentent un inconvénient en ce qu'ils ne sont pas adaptés à une réalité technique et commerciale. En effet les tarifs sont établis en fonction d'une ligne et donc quel que soit le nombre de caractères et le temps passé à les graver, le prix reste le même. De plus, il reste difficile d'établir une tarification avec un système qui prenne en compte tous les types de polices de caractères ainsi que toutes les tailles de caractères disponibles, celles-ci étant actuellement très nombreuses.

La présente invention a donc pour objet de pallier les inconvénients de l'art antérieur.

Cet objectif est atteint par un procédé d'automatisation de l'analyse d'au moins un élément comprenant au moins une caractéristique et constituant un travail à façon à réaliser, de gravure ou de découpe personnalisée d'un objet à partir d'un support matériel, caractérisé en ce qu'il est mis en oeuvre à l'aide d'un système informatique comprenant des moyens de calcul et intégrant un procédé de gestion de travaux à façon, personnalisés, et en ce qu'il comprend des étapes de :
- saisie, sur des moyens de saisie du système, de données informatiques représentant l'élément et de sa caractéristique ou lecture, par des moyens de lecture informatiques dudit système, de telles données déjà mémorisées et utilisées ultérieurement dans une étape de réalisation de l'objet gravé ou découpé,
- lorsqu'il s'agit d'une saisie, mémorisation de données informatiques représentant l'élément et sa caractéristique dans des moyens de mémorisation, ces données étant utilisées ultérieurement dans une étape de réalisation de l'objet gravé ou découpé,
- analyse des données représentant l'élément et sa caractéristique par des moyens de calcul du système informatique,
- en fonction de l'analyse effectuée, identification d'une base de données stockant dans des moyens de mémorisation des informations relatives à l'élément et sa caractéristique analysés,
- extraction de cette base de données identifiée, de données informatiques représentant une valeur pour l'élément et sa caractéristique.

Selon une autre particularité, lorsque le travail de gravure comprend plusieurs éléments, le procédé comprend une étape de calcul par addition de la dernière valeur extraite pour l'élément avec la somme des valeurs déjà extraites lors de l'étape d'extraction pour les autres éléments constituant le travail à réaliser.

Selon une autre particularité, un élément est un caractère, l'étape d'analyse comportant une étape d'identification du caractère et de ses caractéristiques.

Selon une autre particularité, lorsque le travail à réaliser de gravure ou de découpe à façon, personnalisée comprend au moins un élément formant un dessin, un signe ou un logo, l'étape d'analyse comporte une étape de détermination pour l'élément du dessin, du signe ou du logo, du type de déplacement que l'outil de gravure ou de découpe aura à réaliser pour effectuer le travail de gravure ou de découpe à façon, personnalisée.

Selon une autre particularité, lorsque le travail à réaliser de gravure ou de découpe à façon, personnalisée, comprend un élément constituant ou constitutif d'un dessin, d'un signe ou d'un logo, il comprend une étape de détermination de la longueur de l'élément ou de lecture de cette longueur dans des moyens de mémorisation.

Selon une autre particularité, le procédé comprend une étape de calcul par multiplication de la valeur extraite de la base de données pour l'élément constituant ou constitutif d'un dessin, d'un signe ou d'un logo par la longueur déterminée lors de l'étape de détermination.

Selon une autre particularité, le procédé comprend une étape de calcul et d'obtention d'une première valeur intermédiaire par addition d'une valeur extraite de la base de données et associée au support du travail à réaliser avec la valeur extraite pour l'élément ou la somme des valeurs extraites lorsque celui-ci comporte plusieurs éléments.

Selon une autre particularité, le procédé comprend une étape de calcul et d'obtention d'une deuxième valeur intermédiaire par multiplication de la première valeur intermédiaire par la quantité de travaux identiques à réaliser.

Selon une autre particularité, le procédé comprend une étape d'obtention d'une valeur finale mémorisée par addition, lors d'une même session, de toutes les deuxièmes valeurs intermédiaires obtenues.

Un autre objectif de l'invention est de proposer un système informatique pouvant mettre en oeuvre le procédé décrit ci-dessus.

Cet objectif est atteint par un système informatique pour l'analyse de données représentant au moins un élément comprenant au moins une caractéristique et constituant un travail à façon à réaliser de gravure ou de découpe personnalisée d'un objet à partir d'un support matériel, caractérisé en ce qu'il comprend des moyens informatiques de saisie ou de lecture de données informatiques représentant l'élément et sa caractéristique, ces données étant utilisées ultérieurement dans une étape de réalisation de l'objet gravé ou découpé, des moyens de mémorisation de données informatiques représentant l'élément et sa caractéristique, des moyens de calcul aptes à réaliser l'analyse des données informatiques représentant cet élément et sa caractéristique, des moyens d'identification d'une base de données informatique stockant des informations relatives à l'élément et sa caractéristique et des moyens d'extraction de la base de données identifiée de données informatiques représentant une valeur correspondant à l'élément et à sa caractéristique.

Selon une autre particularité, un élément est un caractère.

Selon une autre particularité, une ou plusieurs bases de données mémorisent une valeur pour chaque caractère, dans chacune des polices de caractère disponibles, dans chacune des tailles de caractère disponibles, dans chacun des matériaux disponibles à graver et pour chaque largeur d'outil de gravure possible.

Selon une autre particularité, constitue tout ou partie d'un dessin, d'un signe ou d'un logo.

Selon une autre particularité, le système comprend des moyens de détermination du type de déplacement que l'outil de gravure ou de découpe aura à réaliser pour effectuer le travail de gravure ou de découpe à façon, personnalisée d'un élément constituant tout ou partie d'un dessin, d'un signe ou d'un logo.

Selon une autre particularité, le système comprend des moyens de détermination de la longueur de l'élément constituant tout ou partie d'un dessin, d'un signe ou d'un logo.

Selon une autre particularité, le système échange des informations à travers des moyens de communication avec un système informatique standard de traitement de données utilisé par un demandeur, c'est-à-dire un donneur d'ordres ou un client, ces échanges d'informations se faisant par communication à travers un ou plusieurs réseaux d'échanges de données et étant basés en tout ou partie sur un ou plusieurs protocoles standards d'échange de données alphanumériques et graphiques.

Selon une autre particularité, les moyens de communication utilisés pour l'échange d'information relative à la personnalisation des opérations de gravure comportent l'utilisation du réseau Internet ou de type Intranet.

Selon une autre particularité, les moyens de communication utilisés pour l'échange d'information relative à la personnalisation des travaux comportent l'utilisation d'un langage standard de présentation d'informations textuelles et graphiques exploitables par une grande part des systèmes de traitement de données connectables à un réseau de type Intranet ou au réseau Internet.

Selon une autre particularité, le système comprend des moyens de mémorisation mémorisant en un ou plusieurs fichiers des informations relatives aux types de travaux réalisables et produits de base disponibles, c'est-à-dire objets ou matières à utiliser pour réaliser les travaux, ces informations comportant les types de travaux réalisables, ou contraintes spécifiques aux différents types de travaux, ou types de matériaux disponibles, ou caractéristiques dimensionnelles disponibles, ou couleurs disponibles, ou délais d'approvisionnement, ou bibliothèques de symboles et caractères disponibles, ou quantités disponibles, ou une combinaison de ces éléments.

Selon une autre particularité, le travail à façon, personnalisé, consiste en une gravure personnalisée de plaques, panneaux, étiquettes ou objets en volume.

Selon une autre particularité, le travail à façon, personnalisé, consiste en une découpe personnalisée de motifs, lettres, textes ou dessins ou une combinaison de ces éléments, dans un matériau présenté sous forme de plaques ou feuilles d'une épaisseur déterminée.

L'invention, avec ses caractéristiques et avantages, ressortira plus clairement à la lecture de la description faite en référence aux dessins annexés dans lesquels :
- la figure 1 est un schéma illustrant l'architecture du système et de ses liaisons avec l'extérieur selon l'invention dans un mode de réalisation ;
- la figure 2 est un schéma illustrant l'architecture du système et de ses liaisons avec l'extérieur selon l'invention dans un mode de réalisation présentant un autre mode d'accès ;
- la figure 3 est un schéma illustrant l'architecture interne de l'agent d'interface client et de ses liaisons avec le reste du système dans un mode de réalisation ;
- la figure 4 représente une fenêtre logicielle interactive affichée, sur le système du donneur d'ordres pour définir un ou plusieurs travaux de réalisation d'étiquettes gravées, par le système selon l'invention dans un mode de réalisation ;
- la figure 5 représente une fenêtre logicielle interactive affichée, sur le système du donneur d'ordres pour définir un support de dimensions personnalisées à utiliser pour un travail de réalisation d'étiquettes gravées, par le système selon l'invention dans un mode de réalisation ;
- la figure 6 représente une fenêtre logicielle interactive affichée, sur le système du donneur d'ordres pour définir le texte ou les dessins personnalisant un travail de réalisation d'étiquettes gravées, par le système selon l'invention dans un mode de réalisation ;
- la figure 7 représente l'organigramme de déroulement des étapes du procédé d'analyse selon l'invention.

Dans la suite de la description, on entendra par travail à façon, personnalisé, un travail consistant à réaliser une gravure de panneaux ou lamelles de panneaux, plaques ou étiquettes en plastique, en aluminium, en laiton ou en acier. Un travail à façon, personnalisé peut consister également à réaliser des panneaux ou lamelles de panneaux, enseignes, banderoles ou inscriptions, par l'utilisation de lettres découpées par exemple dans des matières telles que le PVC, l'aluminium, le laiton, des vinyles souples,... La gravure ou la découpe réalisée pourra prendre la forme d'un ou plusieurs caractères, d'un dessin, d'un sigle, d'un logo...

Dans la suite de la description, les termes de donneur d'ordres, client, ou demandeur sont utilisés de façon similaire et désignent l'utilisateur du système informatique selon l'invention, accédant ou ayant accédé au dit système par interaction avec un module dit d'interface client.

Selon l'invention, on met en place une analyse du travail de gravure ou de découpe à réaliser. De cette analyse ressortira une valeur par exemple un prix. Cette analyse sera mise en oeuvre sur un système informatique, mono ou multipostes, tel qu'un terminal standard comportant les fonctionnalités pour mémoriser les caractéristiques du travail de gravure ou de découpe à réaliser. Ces caractéristiques seront saisies par un donneur d'ordre sur le système informatique intégrant un logiciel de gestion des travaux. L'analyse du travail sera effectuée en fonction des caractéristiques saisies par le donneur d'ordre. Un système de gestion des travaux sera décrit ci-dessous. La description de ce système de gestion des travaux n'est nullement limitative et d'autres configurations et modes de fonctionnement pourront être envisagées.

Pour effectuer l'analyse, on utilisera une ou plusieurs bases de données (b1, b2, b3) stockées dans des moyens (12) de mémorisation du système informatique.

Selon l'invention, chaque caractère, pouvant prendre la forme, par exemple, d'une lettre de l'alphabet, d'un chiffre, d'un signe de ponctuation ou d'un caractère spécial, est stocké dans une base de données (b1) dans chaque police disponible sur le système informatique, dans chaque taille disponible sur ce système, pour chaque matériau à graver ou à découper et éventuellement pour chaque épaisseur de caractère. Cette épaisseur de caractère correspondra lors de la réalisation d'un travail de gravure à la largeur de l'outil de gravure. D'autres paramètres tels que la profondeur de gravure pourront être pris en compte. A chacun de ces caractères est attribuée dans la base de données (b1) une valeur calculée au préalable. Cette valeur sera calculée en fonction du temps mis par l'outil pour réaliser le travail de gravure ou de découpe du caractère correspondant à la valeur. Cette valeur variera donc en fonction de la taille du caractère, de sa police, l'outil pouvant effectuer une ou plusieurs passes, de la profondeur de gravure,...

Pour les travaux de gravure ou de découpe à façon, personnalisés, concernant un signe, un dessin ou un logo, une base de données (b2) stocke une valeur pour chaque type de trait, dans une longueur de trait déterminée, pour chaque matériau à graver ou à découper et éventuellement, dans le cas où le travail consiste en une gravure, dans chaque épaisseur de trait ou profondeur de trait. Le type de trait fait référence à la forme de celui-ci, c'est-à-dire linéaire, oblique, circulaire ou suivant une courbe aléatoire. Chaque valeur est fixée en fonction du temps mis par l'outil de gravure ou de découpe pour réaliser le travail de gravure ou de découpe de la longueur du trait déterminée dans chacun des matériaux. Ces valeurs diffèrent en fonction du type de trait puisque par exemple l'outil met plus de temps à réaliser un travail suivant une forme oblique que suivant un trait linéaire. La valeur est fixée par exemple pour une longueur de trait de 1 mm. Lorsque le trait est plus long que 1 mm, la valeur extraite pour 1 mm est multipliée par la longueur réelle du trait. Cette longueur réelle est déterminée par le système informatique ou peut être mémorisée lors de la saisie du travail par le demandeur.

Une base de données (b3) stocke également une valeur pour chaque type de plaque à graver ou panneaux à découper disponible, dans chaque format de plaque ou panneau disponible, dans chaque finition de plaque ou panneau disponible et pour chaque type de fixation possible de la plaque ou de la portion du panneau découpée sur son support.

Le système informatique selon l'invention peut-être un système (1) complet de gestion des travaux. Ce système (1) de gestion des travaux pourra être par exemple en communication avec un ou plusieurs systèmes (4) de fabrication ou un ou plusieurs autres systèmes (5) dit externes, ou les deux. Ce système (1) de gestion des travaux pourra donc être accessible à tout donneur d'ordres à travers le réseau Internet ou un réseau de type Intranet, par l'utilisation d'un ordinateur d'un type standard et communicant par une succession de couches de protocoles et langages standards.

Cette accessibilité est réalisée par l'utilisation de moyens de communication (11), assurant les communications du système avec les donneurs d'ordre de façon transparente pour celui-ci.

Dans un mode de réalisation, cette communication transparente est réalisée en utilisant les protocoles standards d'échange de données informatiques en vigueur sur le réseau Internet ou sur tout réseau de type intranet, c'est-à-dire compatible avec les protocoles utilisés par l'Internet.

Ces protocoles comprennent alors l'utilisation des protocoles TCP/IP pour le transfert de base des données au niveau des paquets de données. Ils comprennent également des modes de communication, au niveau ordinateurs et applications, de types URL et WWW (World Wide Web) se superposant au protocole TCP/IP pour permettre à n'importe quel poste connecté au réseau Internet d'accéder de façon ergonomique et transparente à n'importe quel serveur situé n'importe où sur ce réseau, par la simple utilisation de l'adresse URL de ce serveur.

La communication peut alors s'effectuer à travers le réseau Internet, ou un réseau de type Intranet, ou une succession ou combinaison de ces réseaux.

Dans le cas d'une accessibilité par l'Internet, ces moyens de communication (11) du système (1) pourront être tout raccordement d'un type courant. Ainsi, selon l'importance des flux à faire transiter et l'investissement choisi, il est possible d'effectuer ce raccordement par l'intermédiaire d'un Fournisseur d'Accès Internet (« provider » en anglais) par l'intermédiaire d'un modem analogique raccordé au réseau téléphonique, ou d'un modem numérique raccordé au réseau ISDN (Numéris® en France), d'un modem ADSL sur le réseau téléphonique, ou d'un modem numérique sur un réseau de télévision par câble ou satellite en version numérique. Pour des flux plus importants et à un coût plus important, il est possible d'effectuer un raccordement direct à l'une des branches principales du réseau Internet.

Dans le cas d'une accessibilité par un réseau de type Intranet, le réseau est géré par les services de l'organisation qui en est propriétaire, et sa configuration est paramétrée pour que son fonctionnement soit compatible avec les logiciels prévus pour le réseau Internet.

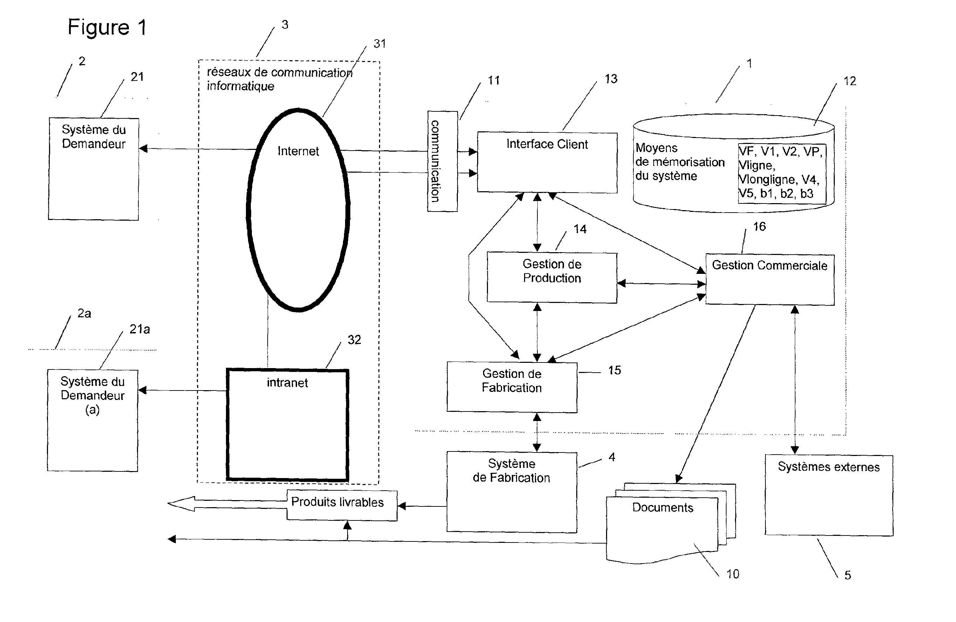

Dans un mode de réalisation représenté en figure 1, le système de gestion de travaux (1) est raccordé directement au réseau Internet. Un demandeur (2) ou donneur d'ordre utilisant un système (21) compatible peut accéder au système de gestion de travaux (1) en se connectant directement au réseau Internet. Un autre demandeur (2a) utilisant un système (21a) compatible peut également accéder au système de gestion de travaux (1) en se connectant au réseau Internet (31) par l'intermédiaire d'un réseau (32) de type Intranet, ce réseau Intranet pouvant lui-même être constitué de plusieurs parties différentes conservant la compatibilité nécessaire.

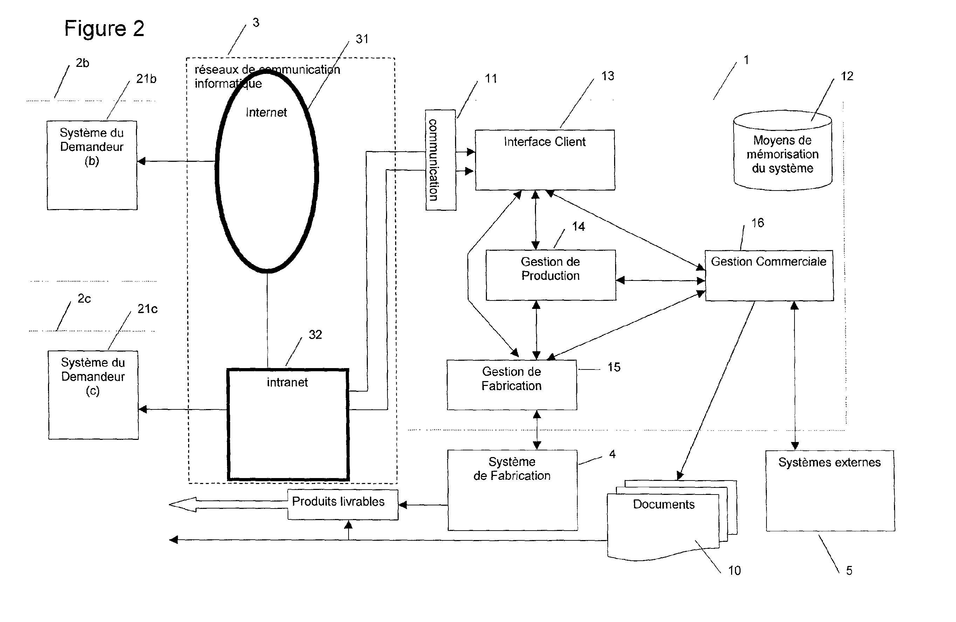

Dans un mode de réalisation représenté en figure 2, le système de gestion de travaux (1) est connecté au réseau Internet (31) par l'intermédiaire d'un réseau (32) de type Intranet. Un demandeur (2b) ou donneur d'ordre utilisant un système (21b) compatible peut accéder au système de gestion de travaux (1) en se connectant directement au réseau Internet. Un autre demandeur (2c) utilisant un système (21 c) compatible peut également accéder directement au système de gestion de travaux (1) par l'intermédiaire du dit réseau (32) Intranet s'il lui est possible de s'y connecter, par exemple sur le même site par l'intermédiaire d'un réseau local (LAN) configuré en Intranet ou depuis un site géographique différent par l'intermédiaire d'un réseau multi-sites (WAN) configuré en intranet.

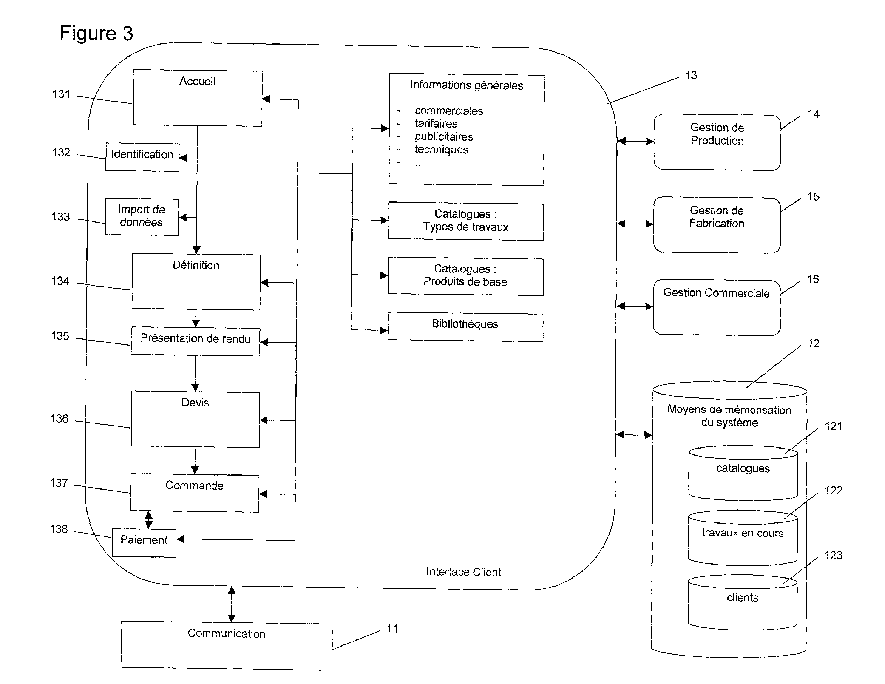

Dans un mode de réalisation représenté en figures 1 et 2, le système de gestion de travaux (1) selon l'invention comprend en particulier des moyens de mémorisation (12) où sont mémorisées des données (121, figure 3) relatives aux types de travaux disponibles et à leurs caractéristiques et contraintes, aux catalogues de produits de base, caractères, symboles ou images utilisables dans ces travaux, des données (122, figure 3) relatives aux différents travaux en cours, ainsi que des données (123, figure 3) relatives aux donneurs d'ordres (2) ou aux partenaires ou systèmes extérieurs (5) interagissant avec le dit système de gestion de travaux (1).

Dans un mode de réalisation, les moyens de communication (11) et l'interface client (13) du système de gestion de travaux (1) peuvent être configurés pour pouvoir communiquer et dialoguer directement avec le système (21, 21a, 21b, 21c) d'un donneur d'ordres (2, 2a, 2b, 2c) et échanger les informations nécessaires à la commande d'un ou plusieurs travaux, même en l'absence d'opérateur humain chez le donneur d'ordres lorsque le dit système (21, 21a, 21 b, 21 c) du dit donneur d'ordres a été automatisé dans ce sens.

Lors d'un accès au système de gestion de travaux (1) selon l'invention, un donneur d'ordres voulant commander la réalisation d'un ou plusieurs travaux est mis en communication de façon interactive par les moyens de communication (11) avec un module d'Interface Client (13) dont les fonctions sont réalisées par un ou plusieurs agents, et peuvent varier selon les applications.

Le donneur d'ordres peut alors consulter, depuis son système, différentes informations et catalogues et définir la nature et les paramètres des travaux qu'il veut faire réaliser. Une fois ces travaux définis, il lui est possible d'obtenir une représentation visuelle du résultat escompté de ces travaux et d'obtenir un devis pour ces travaux suivant une ou plusieurs variantes des dits travaux. Lorsque le devis lui convient, il peut valider celui-ci pour le transformer en commande ferme, et éventuellement effectuer un paiement en ligne. Dans ce même module, un ou plusieurs agents comportent la possibilité de lire, effacer, modifier, ou mémoriser des données dans les moyens de mémorisation (12), ou une combinaison de ces actions.

Dans un mode de réalisation, les informations définissant le travail commandé sont alors transmises à un module de Gestion de Production (14) dont les fonctions sont réalisées par un ou plusieurs agents, et qui va en intégrer la réalisation dans le planning de production du prestataire, et en ordonner la fabrication, de façon automatique ou en interaction avec un ou plusieurs opérateurs humains. Dans ce même module, un ou plusieurs agents comportent la possibilité de lire, effacer, modifier, ou mémoriser des données dans les moyens de mémorisation (12), ou une combinaison de ces actions.

Dans un mode de réalisation, les informations définissant le travail à réaliser vont être transmises pour cela à un module de Gestion de Fabrication (15), dont les fonctions sont réalisées par un ou plusieurs agents. Ces informations vont alors être vérifiées en fonction des contraintes matérielles ou logicielles des machines devant en assurer la réalisation, puis converties en tout ou partie, lorsque c'est possible, sous une forme pouvant être directement transmise à ces mêmes machines sans resaisie par un opérateur humain. Dans ce même module, un ou plusieurs agents comportent la possibilité de lire, effacer, modifier, ou mémoriser des données dans les moyens de mémorisation (12), ou une combinaison de ces actions.

Dans un mode de réalisation, les informations définissant le travail commandé vont être transmises à un module (16) de Gestion Commerciale, dont les fonctions sont réalisées par un ou plusieurs agents. Les documents (10) relatifs au travail réalisé, comme par exemple des factures, bons de livraison, commandes d'approvisionnement, peuvent être produits et les informations correspondantes au travail réalisé être mémorisées dans les moyens de mémorisation du système (1), ou être transmises à un autre système (5) comme un système de comptabilité. Dans ce même module, un ou plusieurs agents comportent la possibilité de lire, effacer, modifier, ou mémoriser des données dans les moyens de mémorisation (12), ou une combinaison de ces actions.

Selon les applications, le système de gestion des travaux (1) pourra comprendre un module d'interface client et éventuellement un ou plusieurs modules décrits ci-dessus. Chaque module présente des fonctions réalisées par un ou plusieurs agents. Pour la présente description, on définira comme agent, ou agent logiciel, un composant réactif de programme d'ordinateur bénéficiant d'une identité, par exemple à travers la possession d'un code l'identifiant localement ou globalement auprès d'autres composants logiciels. Un agent est mémorisé dans des moyens de mémorisation et peut exister en tant que processus exécuté, ou attendant d'être exécuté, par un processeur. La qualité de réactif correspond à une capacité à effectuer une action, interne ou interagissant avec d'autres éléments, lors de la survenue de certains événements.

A chaque étape du fonctionnement d'un agent où cet agent est amené à présenter au donneur d'ordres une liste de choix possibles, le dit agent peut comporter la faculté d'effectuer une sélection parmi les données dont il dispose pour construire la dite liste de choix en fonction des résultats d'un ou plusieurs choix précédent obtenus lors d'une ou plusieurs interactions précédentes, ou en fonction de données mémorisées, ou d'une combinaison de ces éléments. Le dit agent pourra également présenter une liste complète de choix dont certaines parties seront distinguées, par exemple visuellement, en fonction des mêmes critères.

Le dit agent pourra par exemple ne présenter au donneur d'ordres que les produits de base utilisables avec un type de travail précédemment choisi, ou ne présenter en caractères soulignés que les dimensions ou couleurs disponibles pour un produit de base précédemment choisi.

Dans un mode de réalisation, le module d'Interface Client comprend un ou plusieurs agents réalisant au moins une des fonctions d'accueil ou d'identification du donneur d'ordres ou demandeur ou client, ou présentation au demandeur des types de travaux réalisables et d'informations relatives aux produits de base ou caractères ou symboles utilisables pour la réalisation de ces travaux, ou une combinaison de ces fonctions.

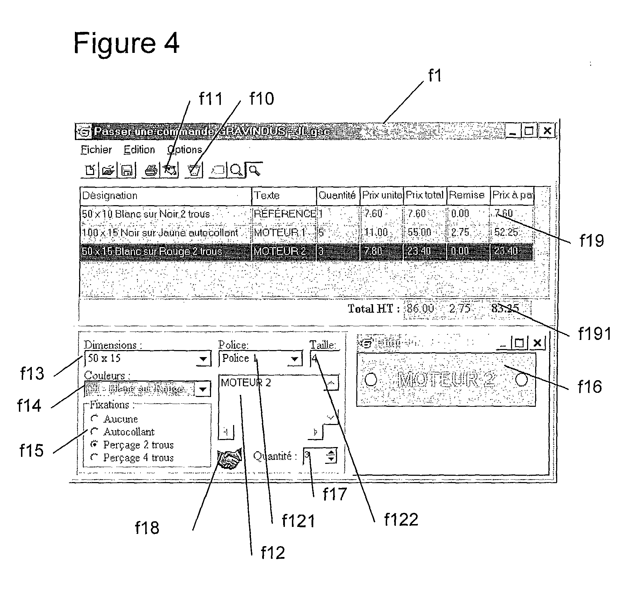

Dans un mode de réalisation représenté en figure 4, le module (13) d'interface client échange avec le demandeur (2) des informations définissant les travaux à réaliser, à travers une première fenêtre (f1) logicielle de saisie et de présentation de données. Cette fenêtre (f1) est affichée, par un logiciel standard de consultation de pages Internet, sur un terminal du système (21) du demandeur comportant un écran de visualisation graphique, un clavier de saisie, et un dispositif de pointage comme une souris.

Cette première fenêtre (f1) comporte plusieurs objets logiciels de type contrôle, utilisés par les agents du module (13) d'interface client dans le cas d'une demande de travaux de réalisation d'étiquettes gravées, et présentant ou recevant les informations suivantes.

Un contrôle (f12) de type boîte de texte permet la saisie par le demandeur du texte personnalisé à graver sur l'étiquette, en cliquant dans le cadre du contrôle puis en saisissant ce texte au clavier. Ce texte est alors mémorisé par un agent (134) dit de définition. Pour personnaliser plus précisément le texte, le donneur d'ordre aura la possibilité d'activer l'ouverture d'une autre fenêtre (f3) décrite ci-dessous.

Un contrôle (f121) de type liste déroulante de sélection permet au demandeur de choisir la police de caractère, c'est-à-dire le type de forme de caractères, à utiliser pour le texte à graver. En cliquant sur le triangle situé sur la droite du contrôle, celui-ci affiche une liste des polices disponibles pour le type de travail en cours de définition, éventuellement adaptée par l'agent de définition (134) à partir d'autres choix précédents. Lorsque le demandeur clique sur le nom de la police choisie, le contrôle mémorise ce choix, ferme sur l'écran la liste des polices disponibles, et affiche le seul nom de la police choisie.

Un contrôle (f122) de type boîte de texte permet au demandeur de choisir la taille des caractères dans laquelle sera gravé le texte saisi dans le contrôle (f12) correspondant. Ce texte est alors mémorisé par l'agent (134) de définition.

Un contrôle (f13) de type liste déroulante permet au demandeur de choisir les dimensions de la plaque à utiliser pour réaliser l'étiquette, parmi une liste de dimensions disponibles ou à définir, en catalogue ou en fonction de choix précédents. Le donneur d'ordres aura également la possibilité de personnaliser les dimensions de la plaque ainsi que la position du texte sur la plaque en activant une fenêtre (f2) décrite ci-dessous. Les dimensions sont alors mémorisées par l'agent (134) de définition.

Un contrôle (f14) de type liste déroulante permet au demandeur de choisir les couleurs devant être utilisées pour le texte à graver et pour le reste de l'étiquette à réaliser, parmi une liste de couleurs disponibles, en catalogue ou en fonction de choix précédents. Ces couleurs sont alors mémorisées par l'agent (134) de définition.

Un contrôle (f15) de type choix exclusifs permet au demandeur de choisir un type de fixation devant être prévue pour l'étiquette à réaliser, parmi une liste de types de fixation disponibles, en catalogue ou en fonction de choix précédents. Ce type de fixation est alors mémorisé par l'agent (134) de définition.

Un contrôle (non représenté) permet au demandeur de choisir un matériau à employer parmi les matériaux disponibles pour les dimensions et couleurs choisies. Ce type de matériau est alors mémorisé par l'agent (134) de définition.

Un contrôle (f16) de type sous-fenêtre d'affichage graphique permet au demandeur de visualiser l'aspect prévu de l'étiquette défini dans le reste de la fenêtre (f1). Cet aspect est calculé et affiché par l'agent (135) de présentation en fonction des informations affichées par défaut ou saisies à la suite de choix effectués dans les autres contrôles de la fenêtre (f1), en combinaison avec des informations prédéfinies lues dans les moyens de mémorisation du système (1) de gestion de travaux.

Un contrôle (f17) de type boîte de texte incrémentable permet au demandeur de choisir la quantité d'étiquettes à réaliser avec les informations affichées par défaut ou saisies à la suite de choix effectués dans les autres contrôles de la fenêtre (f1). La quantité peut être saisie au clavier après avoir cliqué dans le cadre du contrôle, ou être incrémentée ou décrémentée d'une valeur prédéfinie en cliquant sur l'un des triangles affichés sur la droite du contrôle. Cette quantité est alors mémorisée par l'agent (134) de définition.

Un contrôle (f18) de type bouton à cliquer permet au demandeur de valider la définition et de lancer le calcul d'un devis ou d'un prix, par un agent (136) de devis, pour un travail défini par les informations affichées par défaut ou saisies à la suite de choix effectués dans les autres contrôles de la fenêtre (f1). Ce devis est alors mémorisé par un agent (136) dit de devis.

Dans un contrôle (f19) de type cadre affichage, une ou plusieurs lignes de texte sont affichées par l'agent (136) de devis, présentant pour chaque ligne le résumé des paramètres et prix d'un travail défini et validé précédemment. Un total des montants devisés dans les différentes lignes est affiché par l'agent (136) de devis dans un contrôle (f191) de type boîte d'affichage de texte.

Après qu'il a sélectionné par clics une ou plusieurs ligne de devis dans le contrôle (f19) correspondant, un contrôle (f10) de type bouton à cliquer permet au demandeur d'effacer ces lignes de devis.

Après qu'il a sélectionné, en cliquant dessus, une ou plusieurs ligne de devis dans contrôle (f19) correspondant, un contrôle (f11) de type bouton à cliquer permet au demandeur de valider la transformation de ces lignes de devis en commande ferme pour la réalisation des travaux définis par ces lignes de devis. Ces lignes de devis sont alors transformées en commandes et mémorisées par un agent (137) dit de commande.

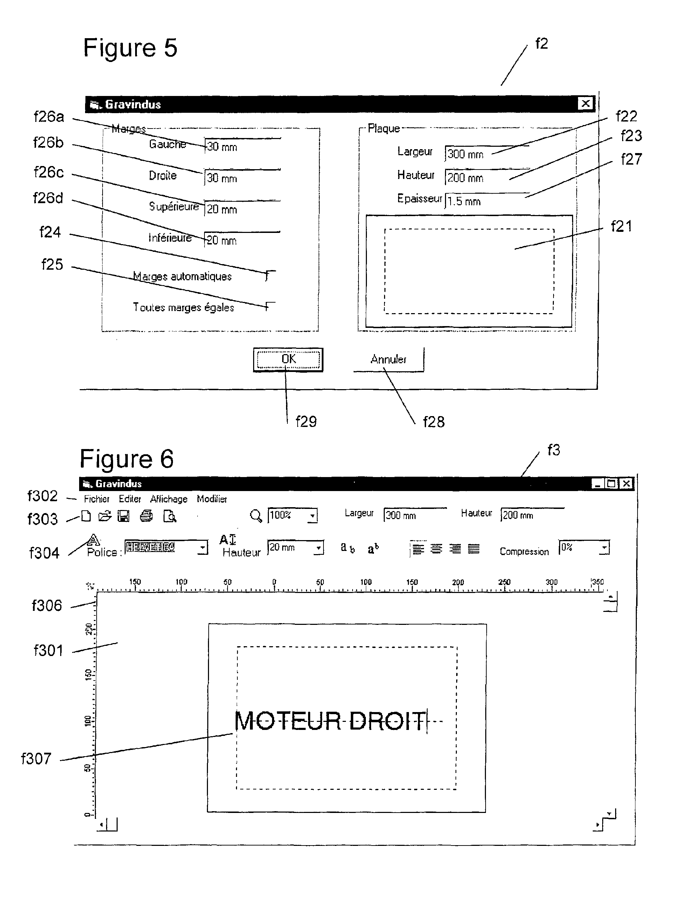

Dans un mode de réalisation représenté en figure 5, le module (13) d'interface client échange avec le demandeur (2) des informations définissant des dimensions et marges d'un support d'étiquette devant recevoir un texte, à travers une deuxième fenêtre (f2) logicielle de saisie et de présentation de données. Cette fenêtre (f2) est affichée, par un logiciel standard de consultation de pages Internet, sur un terminal du système (21) du demandeur comportant un écran de visualisation graphique, un clavier de saisie, et un dispositif de pointage comme une souris.

Cette deuxième fenêtre (f2) comporte plusieurs objets logiciels de type contrôle, utilisés par les agents du module (13) d'interface client pour définir les dimensions et marges d'un support personnalisé devant recevoir un texte, pour la réalisation de travaux d'étiquettes gravées. Cette deuxième fenêtre (f2) est utilisée par exemple lorsque le demandeur a choisi de définir lui-même les dimensions de l'étiquette à réaliser depuis la première fenêtre (f1) décrite ci-dessus, et présente ou reçoit dans ce but les informations suivantes.

Un contrôle (f21) de type représentation graphique indique au demandeur à quel côté du support correspondent les paramètres à saisir dans la fenêtre (f2) et représente les dimensions définies pour le support et les dimensions définies pour les marges à l'intérieur desquelles devra s'inscrire le texte à graver.

Un contrôle (f22) de type boîte de texte permet la saisie par le demandeur de la largeur du support à définir, en cliquant dans le cadre du contrôle puis en saisissant au clavier la valeur de cette largeur. Cette valeur est alors mémorisée par l'agent (134) de définition.

Un contrôle (f23) de type boîte de texte permet la saisie par le demandeur de la hauteur du support à définir, en cliquant dans le cadre du contrôle puis en saisissant au clavier la valeur de cette hauteur. Cette valeur est alors mémorisée par l'agent (134) de définition.

Un contrôle (f24) de type case à cocher permet au demandeur de définir s'il souhaite définir lui-même la valeur des marges, en cliquant sur la case représentée pour cocher ou décocher successivement cette case.

Un contrôle (f25) de type case à cocher permet au demandeur de définir s'il souhaite que la valeur des marges soit uniforme sur les quatre côtés de l'étiquette.

Lorsque le contrôle (f24) de marges automatiques n'est pas coché, quatre contrôles (f26a, f26b, f26c, f26d) de type boîte de texte permettent la saisie par le demandeur de la valeur de la marge à définir respectivement pour les quatre côté de l'étiquette, en cliquant dans le cadre du contrôle puis en saisissant au clavier la valeur de cette hauteur. Cette valeur est alors mémorisée par l'agent (134) de définition. Lorsque le contrôle (f25) de marges uniformes est coché, seul un des quatre contrôles (f26a, f26b, f26c, f26d) de valeur de marges est actif, et la valeur qu'il contient est utilisée pour les trois autres côtés.

Un contrôle (f27) de type liste déroulante de sélection permet le choix par le demandeur de l'épaisseur du support à définir, en cliquant dans le cadre du contrôle puis en sélectionnant à la souris la valeur de cette épaisseur. Cette valeur est alors mémorisée par l'agent (134) de définition.

Un contrôle (f28) de type bouton à cliquer permet au demandeur d'annuler la définition des paramètres définis dans le reste de la fenêtre (f2) et de fermer cette même fenêtre.

Un contrôle (f29) de type bouton à cliquer permet au demandeur de valider la définition d'un support à partir des paramètres affichés dans le reste de la fenêtre (f2) et de fermer cette même fenêtre.

Dans un mode de réalisation représenté en figure 6, le module (13) d'interface client échange avec le demandeur (2) des informations définissant les travaux à réaliser, à travers une troisième fenêtre (f3) logicielle de saisie et de présentation de données. Cette troisième fenêtre (f3) est affichée, par un logiciel standard de consultation de pages Internet, sur un terminal du système (21) du demandeur comportant un écran de visualisation graphique, un clavier de saisie, et un dispositif de pointage comme une souris.

Cette troisième fenêtre (f3) comporte au moins une zone d'affichage (f301) ainsi que plusieurs objets logiciels de type contrôle ou groupes de contrôles, utilisés par l'agent (134) de définition du module (13) d'interface client pour définir et positionner un texte et des dessins personnalisés à marquer ou imprimer sur un panneau signalétique dont le demandeur souhaite commander la réalisation par accès au système (1) de gestion de travaux.

La zone d'affichage (f301) est utilisée par l'agent (134) de définition pour représenter les différents éléments textuels et graphiques définis par le demandeur, dans un aspect et une disposition liés aux informations définissant ces différents éléments.

Une barre de menus (f302) est utilisable par le demandeur pour accéder à différentes commandes d'interaction avec l'agent (134) de définition, et comporte en particulier une disposition et des commandes de bases communes à une grande part des logiciels utilisés avec un ou plusieurs systèmes d'exploitations standards, ce qui permet une utilisation intuitive et accessible sans formation spécifique. Un bandeau (f303) d'icones à cliquer permet au demandeur un accès direct à certaines des dites commandes d'interaction avec l'agent (134) de définition.

Une commande de sauvegarde de fichier et une commande d'ouverture de fichier permettent par exemple respectivement de mémoriser les textes et dessins définis dans la fenêtre (f3) et de réutiliser dans cette même fenêtre (f3) des textes et dessins précédemment mémorisés. Cette mémorisation peut se faire dans le système (21) du demandeur (2) ou dans les moyens de mémorisation (12) du système de gestion des travaux (1).

Un bandeau (f304) de contrôles permet au demandeur de visualiser ou modifier certains paramètres relatifs aux éléments de texte ou dessin définis dans la fenêtre. Ces contrôles comprennent les fonctions de choix de la police de caractère, position d'un élément à parti de la gauche ou du bas, taille des éléments de texte, accès à une commande de gestion des couleurs, réglage du mode d'alignement d'un élément de texte.

Une barre (non représentée) d'icônes à cliquer permet au demandeur de sélectionner un outil logiciel à utiliser lors de la suite de ses actions. Ces outils comprennent les fonctions de sélection d'objet, insertion de texte, modification d'objet, dessin ajustable de formes graphiques de types déterminés, variation de l'échelle d'affichage des éléments définis.

Deux règles graduées verticales et horizontales (f306) présentent l'échelle d'affichage dans la zone d'affichage (f301) des éléments définis dans la fenêtre (f3).

Un curseur (f307) représente par un motif graphique dépendant du type d'action en cours ou de l'outil logiciel sélectionné représente dans la zone d'affichage (f301) l'emplacement ou l'élément où s'appliquera la prochaine action demandée à l'agent (134) de définition s'il s'agit d'une action relative aux éléments de texte et dessin représentés dans cette zone d'affichage (f301).

Selon l'invention, l'analyse du travail est réalisée de la manière suivante au sein du système de gestion de travaux. L'agent de définition du ou des travaux à réaliser mémorise les informations et les caractéristiques du travail à réaliser. L'agent de devis met en oeuvre l'analyse en utilisant la base de données définie ci-dessus.

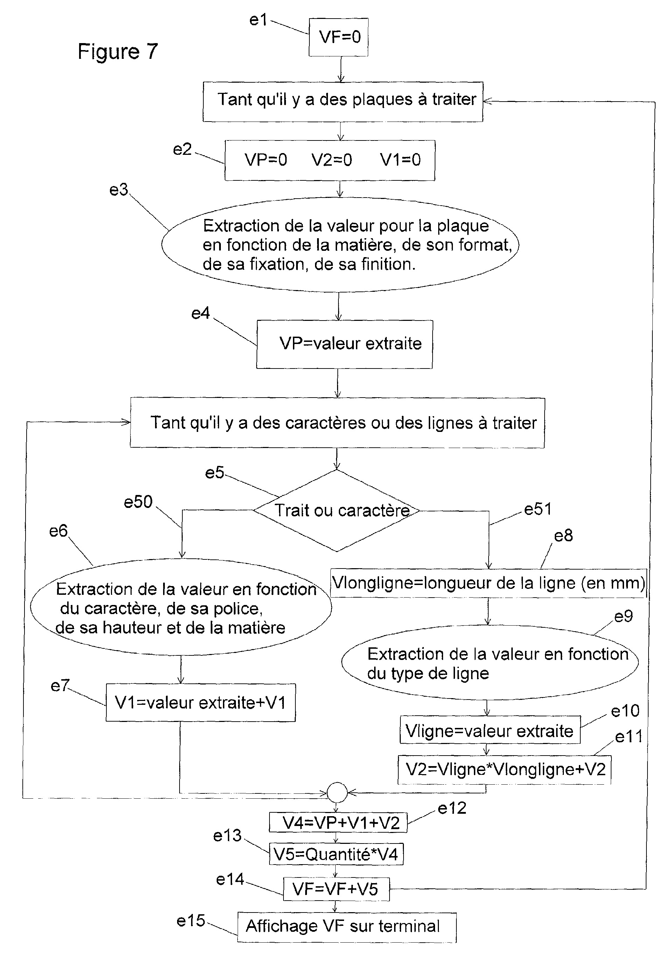

Au début de l'analyse, en référence à la figure 7, dans une première étape (e1), une variable (VF) dite finale est initialisée à zéro. Dans une deuxième étape (e2), la variable (VP) associée à la plaque, ainsi qu'une variable V1 et une variable V2 sont également initialisées à zéro.

L'utilisateur sélectionne une plaque, par exemple dans la fenêtre logicielle (f1). Cette sélection comporte le choix de la matière, de son format, de son mode de fixation, de sa finition. En fonction de ces caractéristiques saisies et mémorisées par l'agent (134) de définition dans des moyens (12) de mémorisation du système (1) informatique, une valeur est extraite dans une troisième étape (e3) d'une base de données (b3) correspondante identifiée par l'agent (136) de devis. Comme décrit précédemment, une base de données (b3) stocke une valeur pour chaque type de plaque disponible, dans chaque format de plaque disponible, dans chaque finition de plaque disponible et pour chaque type de fixation possible de la plaque sur son support. L'agent (136) de devis identifie la base de données (b3) et une recherche correspondant aux caractéristiques de plaque saisies par le donneur d'ordre est effectuée dans la base de données (b3) identifiée. La valeur extraite de la base de données (b3) est mémorisée dans une quatrième étape (e4) par l'agent (136) de devis dans la variable (VP) associée à la plaque, dans les moyens (12) de mémorisation du système (1) informatique.

Ensuite, dans une cinquième étape (e5), une analyse est réalisée par l'agent (136) de devis pour reconnaître chaque élément constituant la gravure ou la découpe à réaliser. En effet, il peut s'agir d'un travail à réaliser pour un ou plusieurs caractères ou pour un ou plusieurs éléments formant un signe, un dessin ou un logo. La reconnaissance est effectuée élément par élément ou caractère par caractère par un agent dit de reconnaissance. Dans le cas où il s'agit d'un signe, d'un dessin ou d'un logo, la saisie est composée d'une ou plusieurs lignes ou traits. Lors de cette cinquième étape (e5), les variables Vlongligne, dont la valeur représente la longueur d'une ligne analysée, et Vligne, représentant la valeur extraite de la base de données (b2) pour la ligne analysée, sont initialisées à zéro.

Dans un premier cas (e50), la reconnaissance effectuée par l'agent de reconnaissance aboutit au fait que l'élément analysé est un caractère. Par caractère on entendra par exemple une lettre, un chiffre, un caractère spécial...L'agent de reconnaissance effectue la reconnaissance des différentes caractéristiques du caractère, ces caractéristiques étant mémorisées par l'agent (134) de définition lors de la saisie par le donneur d'ordre. Comme décrit précédemment, le donneur d'ordre peut définir la police de caractère et la taille des caractères. Pour le caractère, l'agent (136) de devis identifie une base de données (b1, b2, b3) et la valeur correspondant au caractère comportant les caractéristiques reconnues par l'agent de reconnaissance est extraite, dans une sixième étape (e6), de la base de données (b1) identifiée. Cette valeur est ajoutée dans une septième étape (e7) à la valeur mémorisée dans une variable (V1) par l'agent (136) de devis dans des moyens (12) de mémorisation du système (1) informatique. Tant qu'il y a des caractères, pour chaque caractère, l'analyse est effectuée et une valeur est extraite de la base de données (b1) et ajoutée à la valeur déjà mémorisée dans la variable V1.

Dans un deuxième cas (e51), la reconnaissance effectuée par l'agent de reconnaissance aboutit au fait que l'élément reconnu est un trait ou une ligne constitutive d'un signe, d'un dessin ou d'un logo composé d'une ou plusieurs lignes. Pour une première ligne, l'agent de reconnaissance effectue la reconnaissance du type de la ligne mémorisée par l'agent de définition. Comme décrit précédemment, celle-ci peut être linéaire ou suivre une courbe définie ou aléatoire. Une fois la reconnaissance du type de ligne effectuée, l'agent de reconnaissance effectue une mesure de la longueur de la ligne ou extrait des moyens (12) de mémorisation, cette longueur, déjà déterminée par le système et mémorisée lors de la saisie, par exemple par l'agent de définition, dans les moyens de mémorisation. La valeur correspondant à cette longueur est mémorisée, dans une huitième étape (e8), par l'agent de reconnaissance dans une variable (Vlongligne) dans des moyens (12) de mémorisation du système (1) informatique. L'agent (136) de devis lance ensuite une requête en fonction du type de ligne reconnu par l'agent de reconnaissance. Une base de données (b2) mémorise par exemple une valeur pour chaque type de ligne, dans une longueur de ligne déterminée, pour chaque matériau à graver ou à découper et éventuellement, dans le cas où le travail consiste en une gravure, dans chaque épaisseur de trait ou profondeur de trait. Dans le cas où la base de données (b2) mémorise tout simplement uniquement une valeur pour chaque type de ligne d'une longueur déterminée, par exemple 1 mm, dans une neuvième étape (e9), une valeur est extraite de cette base de données (b2) en fonction du type de ligne reconnue par l'agent de reconnaissance. Cette valeur extraite est mémorisée dans une dixième étape (e10) dans une variable (Vligne) par l'agent (136) de devis dans les moyens (12) de mémorisation du système (1) informatique. L'agent (136) de devis lance alors, dans une huitième étape (e8), une opération de calcul en multipliant la valeur extraite pour la ligne et mémorisée dans la variable Vligne par la longueur mesurée et mémorisée dans la variable Vlongligne. La valeur obtenue après cette opération de calcul est ajoutée dans une onzième étape (e11) à la valeur mémorisée dans une variable (V2) par l'agent (136) de devis dans les moyens de mémorisation du système (1) informatique. Les opérations décrites dans ce paragraphe sont effectuées tant qu'il y a des lignes composant un dessin, un signe ou un logo.

Une fois l'analyse du travail à réaliser effectuée comme décrit ci-dessus, la valeur mémorisée dans la variable V1 et la valeur mémorisée dans la variable V2 sont ajoutées à la valeur extraite et mémorisée dans la variable (VP) associée à la plaque. Dans une douzième étape (e12), la valeur obtenue est mémorisée dans une variable (V4) dans les moyens de mémorisation du système (1) informatique. Cette valeur mémorisée dans la variable V4 est par exemple affichée par l'agent (136) de devis dans la première fenêtre (f1) sur le terminal du système (21) du demandeur en face du récapitulatif de la demande saisie et validée par le demandeur.

Le donneur d'ordre peut également, s'il le souhaite, commander plusieurs travaux identiques en saisissant, par exemple dans la première fenêtre (f1) à l'aide d'un contrôle (f17) de type boîte de texte incrémentable, une quantité de travaux identiques à réaliser. La valeur représentant cette quantité mémorisée par l'agent (134) de définition lors de la saisie et de la validation par le demandeur (2), est multipliée par la valeur mémorisée dans la variable V4. Dans une treizième étape (e13), la valeur obtenue après ce calcul est mémorisée dans une variable (V5) dans les moyens (12) de mémorisation du système (1) informatique. Cette valeur est par exemple affichée dans la première fenêtre (f1) sur le terminal du système (21) du demandeur en face du récapitulatif de la demande saisie et validée par le demandeur.

La valeur mémorisée dans la variable V5 est ensuite ajoutée à la valeur mémorisée dans la variable (VF) finale et la valeur obtenue est mémorisée, dans une quatorzième étape (e14), dans la variable (VF) finale. Tant qu'il y a des plaques à traiter, c'est-à-dire demandées par le demandeur, le processus décrit depuis la deuxième étape (e2) incluse jusqu'à cette quatorzième étape (e14) également incluse est effectué. Une fois que toutes les plaques ont été traitées, dans une dernière étape (e15), l'agent (136) de devis affiche ensuite sur un terminal du système (21) informatique du demandeur, par exemple dans la première fenêtre logicielle (f1), la valeur mémorisée dans la variable (VF) finale.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé d'automatisation de l'analyse d'au moins un élément comprenant au moins une caractéristique et constituant un travail à façon à réaliser, de gravure ou de découpe personnalisée d'un objet à partir d'un support matériel, **caractérisé en ce qu'**il est mis en oeuvre à l'aide d'un système (1) informatique comprenant des moyens de calcul et intégrant un procédé de gestion de travaux à façon, personnalisés, et **en ce qu'**il comprend des étapes de :
- saisie, sur des moyens de saisie du système (1), de données informatiques représentant l'élément et de sa caractéristique ou lecture, par des moyens de lecture informatiques dudit système, de telles données déjà mémorisées et utilisées ultérieurement dans une étape de réalisation de l'objet gravé ou découpé,
- lorsqu'il s'agit d'une saisie, mémorisation de données informatiques représentant l'élément et sa caractéristique dans des moyens de mémorisation, ces données étant utilisées ultérieurement dans une étape de réalisation de l'objet gravé ou découpé,
- analyse des données représentant l'élément et sa caractéristique par des moyens de calcul du système informatique,
- en fonction de l'analyse effectuée, identification d'une base de données stockant dans des moyens de mémorisation des informations relatives à l'élément et sa caractéristique analysés,
- extraction de cette base de données identifiée, de données informatiques représentant une valeur pour l'élément et sa caractéristique.

2. Procédé selon la revendication 1, **caractérisé en ce que** lorsque le travail de gravure comprend plusieurs éléments, le procédé comprend une étape de calcul par addition de la dernière valeur extraite pour l'élément avec la somme des valeurs déjà extraites lors de l'étape d'extraction pour les autres éléments constituant le travail à réaliser.

3. Procédé selon la revendication 1 ou 2, **caractérisé en ce qu'**un élément est un caractère, l'étape d'analyse comportant une étape d'identification du caractère et de ses caractéristiques.

4. Procédé selon l'une des revendications 1 à 3, **caractérisé en ce que** lorsque le travail à réaliser de gravure ou de découpe à façon, personnalisée comprend au moins un élément formant un dessin, un signe ou un logo, l'étape d'analyse comporte une étape de détermination pour l'élément du dessin, du signe ou du logo, du type de déplacement que l'outil de gravure ou de découpe aura à réaliser pour effectuer le travail de gravure ou de découpe à façon, personnalisée.

5. Procédé selon l'une des revendications 1 à 4, **caractérisé en ce que** lorsque le travail à réaliser de gravure ou de découpe à façon, personnalisée, comprend un élément constituant ou constitutif d'un dessin, d'un signe ou d'un logo, il comprend une étape de détermination de la longueur de l'élément ou de lecture de cette longueur dans des moyens de mémorisation.

6. Procédé selon la revendication 5, **caractérisé en ce qu'**il comprend une étape de calcul par multiplication de la valeur extraite de la base de données pour l'élément constituant ou constitutif d'un dessin, d'un signe ou d'un logo par la longueur déterminée lors de l'étape de détermination.

7. Procédé selon l'une des revendications 1 à 6, **caractérisé en ce qu'**il comprend une étape de calcul et d'obtention d'une première valeur intermédiaire par addition d'une valeur extraite de la base de données et associée au support du travail à réaliser avec la valeur extraite pour l'élément ou la somme des valeurs extraites lorsque celui-ci comporte plusieurs éléments.

8. Procédé selon la revendication 7, **caractérisé en ce qu'**il comprend une étape de calcul et d'obtention d'une deuxième valeur intermédiaire par multiplication de la première valeur intermédiaire par la quantité de travaux identiques à réaliser.

9. Procédé selon la revendication 8, **caractérisé en ce que** qu'il comprend une étape d'obtention d'une valeur finale mémorisée par addition, lors d'une même session, de toutes les deuxièmes valeurs intermédiaires obtenues.

10. Système informatique pour l'analyse de données représentant au moins un élément comprenant au moins une caractéristique et constituant un travail à façon à réaliser de gravure ou de découpe personnalisée d'un objet à partir d'un support matériel, **caractérisé en ce qu'**il comprend des moyens informatiques de saisie ou de lecture de données informatiques représentant l'élément et sa caractéristique, ces données étant utilisées ultérieurement dans une étape de réalisation de l'objet gravé ou découpé, des moyens (12) de mémorisation de données informatiques représentant l'élément et sa caractéristique, des moyens de calcul aptes à réaliser l'analyse des données informatiques représentant cet élément et sa caractéristique, des moyens d'identification d'une base de données informatique stockant des informations relatives à l'élément et sa caractéristique et des moyens d'extraction de la base de données identifiée de données informatiques représentant une valeur correspondant à l'élément et à sa caractéristique.

11. Système selon la revendication 10, **caractérisé en ce qu'**un élément est un caractère.

12. Système selon la revendication 11, **caractérisé en ce que** une ou plusieurs bases de données (b1) mémorisent une valeur pour chaque caractère, dans chacune des polices de caractère disponibles, dans chacune des tailles de caractère disponibles, dans chacun des matériaux disponibles à graver et pour chaque largeur d'outil de gravure possible.

13. Système selon la revendication 10, **caractérisé en ce qu'**un élément constitue tout ou partie d'un dessin, d'un signe ou d'un logo.

14. Système selon la revendication 13, **caractérisé en ce qu'**il comprend des moyens de détermination du type de déplacement que l'outil de gravure ou de découpe aura à réaliser pour effectuer le travail de gravure ou de découpe à façon, personnalisée d'un élément constituant tout ou partie d'un dessin, d'un signe ou d'un logo.

15. Système selon la revendication 13 ou 14, **caractérisé en ce qu'**il comprend des moyens de détermination de la longueur de l'élément constituant tout ou partie d'un dessin, d'un signe ou d'un logo.

16. Système selon l'une des revendications 10 à 15, **caractérisé en ce qu'**il échange des informations à travers des moyens de communication avec un système (21) informatique standard de traitement de données utilisé par un demandeur (2), c'est-à-dire un donneur d'ordres ou un client, ces échanges d'informations se faisant par communication à travers un ou plusieurs réseaux d'échanges de données et étant basés en tout ou partie sur un ou plusieurs protocoles standards d'échange de données alphanumériques et graphiques.

17. Système selon la revendication 16, **caractérisé en ce que** les moyens de communication utilisés pour l'échange d'information relative à la personnalisation des opérations de gravure comportent l'utilisation du réseau Internet (31) ou de type Intranet (32).

18. Système selon la revendication 16 ou 17, **caractérisé en ce que** les moyens de communication (11) utilisés pour l'échange d'information relative à la personnalisation des travaux comportent l'utilisation d'un langage standard de présentation d'informations textuelles et graphiques exploitables par une grande part des systèmes de traitement de données connectables à un réseau de type Intranet (32) ou au réseau Internet (31).

19. Système selon l'une des revendications 16 à 18, **caractérisé en ce qu'**il comprend des moyens de mémorisation (12) mémorisant en un ou plusieurs fichiers des informations relatives aux types de travaux réalisables et produits de base disponibles, c'est-à-dire objets ou matières à utiliser pour réaliser les travaux, ces informations comportant les types de travaux réalisables, ou contraintes spécifiques aux différents types de travaux, ou types de matériaux disponibles, ou caractéristiques dimensionnelles disponibles, ou couleurs disponibles, ou délais d'approvisionnement, ou bibliothèques de symboles et caractères disponibles, ou quantités disponibles, ou une combinaison de ces éléments.

20. Système selon l'une des revendications 10 à 19, **caractérisé en ce que** le travail à façon, personnalisé, consiste en une gravure personnalisée de plaques, panneaux, étiquettes ou objets en volume.

21. Système selon l'une des revendications 10 à 19, **caractérisé en ce que** le travail à façon, personnalisé, consiste en une découpe personnalisée de motifs, lettres, textes ou dessins ou une combinaison de ces éléments, dans un matériau présenté sous forme de plaques ou feuilles d'une épaisseur déterminée.
